# EUROPÄISCHE PATENTSCHRIFT

(11) **EP 1 904 554 B1**
(45) Veröffentlichungstag und Bekanntmachung des Hinweises auf die Patenterteilung: **19.11.2008**
(21) Anmeldenummer: 06763733.0
(22) Anmeldetag: 14.06.2006
(51) Int. Cl.: C08G 65/00

(54) **AMINOCARBONSÄUREESTER MIT EO/PO/BUO-BLOCKPOLYMERISATEN UND DEREN VERWENDUNG ALS EMULSIONSSPALTER**
AMINOCARBOXYLIC ACID ESTERS HAVING EO/PO/BUO-BLOCKPOLYMERS AND USE THEREOF AS DEMULSIFIERS
ESTERS D'AMINOACIDE CONTENANT DES POLYMERES EN BLOCS EO/PO/BUO ET LEUR UTILISATION COMME DESEMULSIFIANTS

(30) Priorität: 17.06.2005 DE 102005028500
(43) Veröffentlichungstag der Anmeldung: 02.04.2008
(73) Patentinhaber: BASF SE, 67056 Ludwigshafen (DE)
(72) Erfinder: GUZMANN, Marcus, 69242 Mühlhausen (DE); NEUMANN, Peter, 68309 Mannheim (DE); BÜCHNER, Karl-Heinz, 68804 Altlussheim (DE); OFTRING, Alfred, 67098 Bad Dürkheim (DE)
(86) Internationale Anmeldenummer: PCT/EP2006/063239
(87) Internationale Veröffentlichungsnummer: WO 2006/134145

(56) Entgegenhaltungen:
- EP-A- 0 429 892
- DE-A1- 4 217 985
- US-A- 4 568 737

## Beschreibung

Diese Erfindung betrifft Aminocarbonsäureester mit EO/PO/BuO-Blockpolymerisaten, Verfahren zur Herstellung derartiger Verbindungen und die Verwendung dieser Verbindungen als Emulsionsspalter, insbesondere für Rohölemulsionen.

Erdöl fällt in der Regel als relativ stabile Wasser-in-Öl-Emulsion an. Diese kann je nach Alter und Lagerstätte bis zu 90 Massen% Wasser enthalten. Rohölemulsionen unterscheiden sich in ihrer Zusammensetzung von Lagerstätte zu Lagerstätte. Neben Wasser enthält die Rohölemulsion im Allgemeinen noch 0,1 bis 25 Massen% Salze und Feststoffe. Wasser, Salze und Feststoffe müssen entfernt werden, bevor die Rohölemulsion transportiert und als Rohöl in der Raffinerie verarbeitet werden kann. Das Rohöl selbst ist eine heterogene Mischung und enthält vor allem natürliche Emulgatoren, wie Naphthensäuren, heterozyklische Stickstoffverbindungen und oxidierte Kohlenwasserstoffe, des weiteren Erdölkolloide, wie Asphaltene und Harze, anorganische Salze, wie Eisensulfide, Eisenoxide, Tone und Erze, Natriumchlorid und Kaliumchlorid.

Die Rohölemulsionsspaltung wird aus ökonomischen und technischen Gründen durchgeführt, um einerseits den unwirtschaftlichen Transport von Wasser zu vermeiden, Korrosionsprobleme zu verhindern oder wenigstens zu minimieren, und um den Energieeinsatz für die Transportpumpen zu verringern.

Die Spaltung der Rohölemulsion stellt somit einen wesentlichen Verfahrensschritt bei der Erdölförderung dar. Das im Rohöl enthaltene Wasser, das vor allem durch natürliche Emulgatoren wie Naphthensäuren emulgiert wird, bildet eine stabile Emulsion. Dies geschieht dadurch, dass die Emulgatoren die Grenzflächenspannung zwischen Wasser- und Ölphase herabsetzen und somit die Emulsion stabilisieren. Durch Zugabe von Emulsionsspaltern (Demulgatoren), d.h. grenzflächenaktiven Substanzen, die in die Öl-Wasser-Grenzfläche eindringen und dort die natürlichen Emulgatoren verdrängen, kann eine Koaleszenz der emulgierten Wassertröpfchen bewirkt werden, was schließlich zur Phasentrennung führt.

EP-A-0 264 841 beschreibt die Verwendung von linearen Copolymeren aus hydrophoben Acrylsäure- oder Methacrylsäureestern und hydrophilen ethylenisch ungesättigten Monomeren als Erdölemulsionsspalter.

EP-A 0 499 068 beschreibt die Herstellung von Reaktionsprodukten aus vinylischen Monomeren und Alkohol- oder Phenolalkoxylaten und deren Verwendung als Demulgatoren für Rohölemulsionen.

US 5,460,750 beschreibt Reaktionsprodukte aus Phenolharzen und Alkylenoxiden als Emulsionsspalter für Rohölemulsionen.

EP-A 0 541 018 beschreibt Emulsionsspalter, hergestellt aus Polyethyleniminen mit einer mittleren Molmasse von 35.000 g/mol und Ethylenoxid und Propylenoxid, wobei als zweite wirksame Komponente zusätzlich ein Alkylphenolformaldehydsalz eingesetzt wird.

EP-A 0 784 645 beschreibt die Herstellung von Alkoxylaten von Polyaminen, speziell von PolyPolyethyleniminen und Polyvinyliminen, und deren Verwendung als Rohölemulsionsspalter.

EP-A 0 267 517 offenbart verzweigte Polyaminoester als Demulgatoren. Die verzweigten Polyaminoester werden durch Umsetzung alkoxylierten primären Aminen mit Triolen und Dicarbonsäuren erhalten.

Weiterhin werden dendrimere Polymere als Demulgatoren für Rohöl beschrieben.

US 4,507,466 und US 4,857,599 offenbaren dendrimere Polyamidoamine. US 4,568,737 offenbart dendrimere Polyamidoamine sowie Hybrid-Dendrimere aus Polyamidoaminen, Polyestern und Polyethern, und deren Verwendung als Demulgatoren für Rohöl. Die Herstellung von Dendrimeren ist sehr aufwändig, weshalb diese Produkte sehr teuer und somit in großtechnischen Mengen nicht wirtschaftlich einsetzbar sind.

Aufgabe der vorliegenden Erfindung ist es daher, Verbindungen bereitzustellen, die zur Spaltung von Emulsionen, insbesondere von Rohölemulsionen eingesetzt werden können. Die Verbindungen sollten einfach und kostengünstig herstellbar sein. Sie sollten gute Demulgationseigenschaften besitzen, - idealerweise bessere Demulgationseigenschaften als die bekannten Systeme, und sie sollten nach Möglichkeit bioabbaubar sein.

Diese Aufgabe wird überraschend durch die Verbindungen gemäß der Ansprüche 1 bis 6, die Verfahren zur Herstellung gemäß der Ansprüche 7 bis 9, die Verwendung der Verbindungen gemäß der Ansprüche 10 und 11 gelöst. Weiterer Gegenstand der vorliegenden Erfindung ist eine Zusammensetzung gemäß Anspruch 12, ein Kit of parts gemäß Anspruch 13, ein Verfahren zur Wasserabtrennung gemäß Anspruch 14 und ein Öl gemäß Anspruch 15.

Somit stellt eine Verbindung der Formel 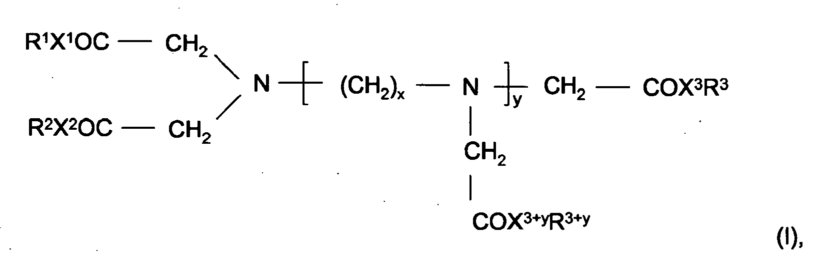 in der
x eine Zahl von 2 bis 10 ist,
y eine Zahl von 0 bis 10 ist,
R¹ R², R³ ..., R^{3+y} unabhängig voneinander
-[(EO)ₖ^{(1, ...,t)}-(PO)ₘ^{(1, ...,t)}-(BuO)ₙ^{(1, ...,t)},]ₜ-R^{z} ist,
k^{(1, ...,t)} in jedem der t Abschnitte unabhängig voneinander eine Zahl von 0 bis 200 ist,
m^{(1, ...,t)} in jedem der t Abschnitte unabhängig voneinander eine Zahl von 0 bis 200 ist,
n^{(1, ...,t)} in jedem der t Abschnitte unabhängig voneinander eine Zahl von 0 bis 200 ist,
t eine Zahl von 1 bis 20 ist,
R^{z} H, Alkyl, Cycloalkyl, Heteroalkyl, Heterocycloalkyl, Aryl, Aralkyl oder Heteroaryl ist,
X¹, X², X³, ..., X^{3+y} unabhängig voneinander -O-, -NH- oder -NR^{z}- ist,
mit der Maßgabe, dass,
wenn x = 2 und y = 1 ist,
bei mindestens einem R¹ R², R³ oder R^{3+y} mindestens ein k^{(1, ...,t)} oder n^{(1, ...,t)} nicht 0 ist und in allen anderen Fällen mindestens ein k^{(1, ...,t)} oder m^{(1, ...,t)} oder n^{(1, ..., t)} nicht 0 ist,
einen Gegenstand der vorliegenden Erfindung dar.

Dabei ist eine Verbindung, wie oben genannt, bevorzugt, bei der unabhängig voneinander
x eine Zahl von 2 bis 6 ist,
y eine Zahl von 0 bis 5 ist,
k^{(1, ...,t)} in jedem der t Abschnitte unabhängig voneinander eine Zahl von 0 bis 100 ist,
m^{(1, ...,t)} in jedem der t Abschnitte unabhängig voneinander eine Zahl von 0 bis 100 ist,
n^{(1, ...,t)} in jedem der t Abschnitte unabhängig voneinander eine Zahl von 0 bis 100 ist,
t eine Zahl von 1 bis 10 ist,
R^{z} H oder Alkyl, Cycloalkyl, Heteroalkyl, Heterocycloalkyl, Aryl, Aralkyl oder Heteroaryl mit 1 bis 20 C-Atomen ist,
jedes X¹, X², X³, ..., X^{3+y} -O-, -NH- oder -NR^{z}- ist.

Eine Verbindung, wie oben genannt, bei der unabhängig voneinander
x 2 ist,
y 0, 1 oder 2 ist,
k^{(1, ...,t)} in jedem der t Abschnitte unabhängig voneinander eine Zahl von 0 bis 50 ist,
m^{(1, ...,t)} in jedem der t Abschnitte unabhängig voneinander eine Zahl von 0 bis 50 ist,
n^{(1, ...,t)} in jedem der t Abschnitte unabhängig voneinander eine Zahl von 0 bis 50 ist,
t eine Zahl von 1 bis 5 ist,
R^{z} H oder Alkyl, Cycloalkyl, Heteroalkyl, Heterocycloalkyl, Aryl, Aralkyl oder Heteroaryl mit 1 bis 10 C-Atomen ist,
X¹, X², X³, ..., X^{3+y} -O- ist, ist besonders bevorzugt und eine Verbindung, bei der unabhängig voneinander
y = 1 ist,
k^{(1, ...,t)} in jedem der t Abschnitte unabhängig voneinander eine Zahl von 0 bis 30 ist,
m^{(1, ...,t)} in jedem der t Abschnitte unabhängig voneinander eine Zahl von 0 bis 30 ist,
n^{(1, ...,t)} in jedem der t Abschnitte unabhängig voneinander eine Zahl von 0 bis 30 ist,
t = 1, 2 oder 3 ist,
R^{z} H oder Alkyl mit 1 bis 5 C-Atomen ist, ist ganz besonders bevorzugt.

Insbesondere stellen solche Verbindungen bevorzugte Ausführungsformen der vorliegenden Erfindung dar, bei denen
a) t = 1 ist und
   (i) k¹ = 0 ist oder
   (ii) m¹ = 0 ist oder
   (iii) n¹ = 0 ist; oder
b) t = 2 ist und
   (i) k¹ = 0 ist, m¹ und k² nicht 0 ist oder
   (ii) k¹ und m¹ = 0 sind, n¹ nicht 0 ist und k² nicht 0 ist oder k¹ und m¹ = 0 sind, n¹ nicht 0 ist und m² nicht 0 ist.

Ganz besonders bevorzugt ist eine Verbindung, bei der jedes k^{(1, ...,t)} oder jedes m^{(1, ...,t)} oder jedes n^{(1, ...,t)} = 0 ist.

Bei allen Zahlen x, y, k¹, k², ..., k^{t}, m¹, m², ..., m^{t}, n¹, n², ...n^{t} und t handelt es sich bei jedem einzelnen Molekül um ganze Zahlen. Da die erfindungsgemäßen Verbindungen aber Bestandteile mit oligomerem und/oder polymerem Charakter aufweisen, d.h. Bestandteile enthalten, die eine gewisse Längenverteilung aufweisen oder zumindest aufweisen können, sind auch gebrochene Zahlenwerte möglich. Ist z.B. y = 0, R¹ = R² = R³ = -[(EO)_{k(1, ...,t)}]-R^{z}, da m = n = 0 ist, und hat k¹ den Wert 10, k² den Wert 12 und k³ den Wert 13, so wird man zur Beschreibung des Moleküls, einen mittleren Wert k = 11,67 angeben. Insofern sind als Zahlenwerte nicht nur ganze Zahlen möglich; und soweit Mischungen mehrerer Moleküle vorliegen, stehen die für derartige Mischungen ermittelten Zahlenwerte denen der für einzelne Moleküle ermittelten Zahlenwerten gleich.

Bestimmte Grundkörper sind dabei, wie oben bereits ausgeführt, besonders bevorzugt. So ergibt sich für y = 0 Nitrilotriacetat (NTA) als Grundkörper, für y = 1 Ethylendiamintetraacetat (EDTA) und für y = 2 Diethylentriaminpentaacetat (DTPA).

Ebenso sind solche Verbindungen bevorzugt, bei denen die Einheiten EO (Ethylenoxid), PO (Propylenoxid) und/oder BuO (Butylenoxid) im wesentlichen in Blockform vorliegen. Dabei kann auch die Reihenfolge der Blöcke variieren. So ist als eine Abfolge in der Reihenfolge vom Grundkörper zu R^{z} EO-PO, EO-BuO, PO-EO, PO-BuO, BuO-EO, BuO-PO, EO-PO-EO, EO-PO-BuO, EO-BuO-EO, EO-BuO-PO, PO-EO-PO, PO-EO-BuO, PO-BuO-EO, PO-BuO-PO, BuO-EO-PO, BuO-EO-BuO, BuO-PO-EO, BuO-PO-BuO, EO-PO-EO-PO, EO-PO-EO-BuO, ... verwendbar. Besonders bevorzugt sind dabei solche Verbindungen, in denen ein oder zwei Blöcke pro R vorhanden sind.

Weiterer Gegenstand der vorliegenden Erfindung ist ein Verfahren zur Herstellung von Verbindungen, wie sie oben beschrieben sind, bei dem eine Verbindung der Formel 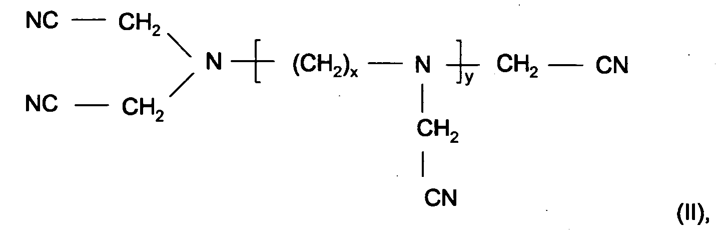 wobei x und y dieselbe Bedeutung haben wie in einem der Ansprüche 1 bis 4,
in einem ersten Schritt mit R¹-X¹H, R²-X²H, R³-X³H, ..., R^{3+y}-X^{3+y}H und Mineralsäure und gleichzeitig oder
in einem zweiten Schritt mit Wasser oder einer wässrigen Base umgesetzt wird.

Als Mineralsäure kann jegliche Mineralsäure oder Mischung aus mehreren dieser Säuren verwendet werden, wobei die Verwendung von HCl besonders bevorzugt ist.

Als Base kann jegliche Base oder Mischung von Basen verwendet werden, wobei es bevorzugt ist, NaOH zu verwenden.

Ein weiteres erfindungsgemäßes Verfahren zur Herstellung einer Verbindung wie oben beschrieben ist ein Verfahren, bei dem ein niederer Carbonsäureester oder eine Carbonsäure der Formel 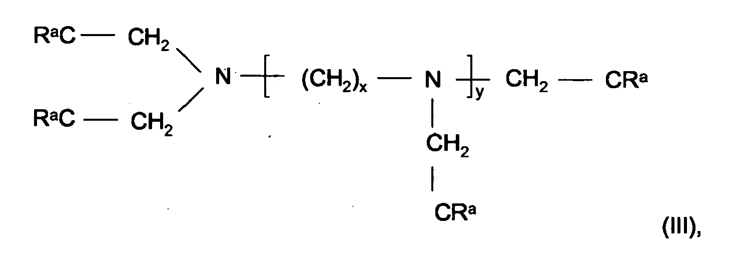 wobei x und y dieselbe Bedeutung haben wie in einem der Ansprüche 1 bis 4 und mit R^{a} = C₁-C₆-Alkyl, H
säure- oder basekatalysiert mit Alkylpolyglycol umgesetzt wird.

Als Säuren und Basen kommen hier die oben bei dem Alternativverfahren angegebenen in Frage. Unter einem niederen Carbonsäureester ist ein solcher Ester zu verstehen, für den die ebenfalls angegebene Definition von R = C₁ bis C₆ für die Estergruppen zutrifft. Derartige Ester sind deshalb bevorzugt, weil sie eine weitere Verbesserung der Verfahrensführung ermöglichen: So ist ein Verfahren besonders bevorzugt, bei dem der entstehende Alkohol R⁹-OH mit R^{a} = C₁-C₆-Alkyl durch Destillation entfernt wird.

Grundsätzlich werden beide Verfahren im Temperaturbereich von - 40 bis 250 °C durchgeführt, wobei eine Temperatur im Bereich von 0 bis 200 °C bevorzugt und eine Temperatur im Bereich von Raumtemperatur bis 180°C besonders bevorzugt ist. Die Reaktionen können unter Atmosphärendruck, aber auch unter Überdruck oder im Vakuum durchgeführt werden. Die Reaktionen können grundsätzlich absatzweise, kontinuierlich oder halbkontinuierlich durchgeführt werden. Werden die Reaktionen in mehreren Schritten durchgeführt, können die einzelnen Schritte in einem oder in verschiedenen Reaktionsgefäßen durchgeführt werden.

Weiterer Gegenstand der vorliegenden Erfindung ist die Verwendung einer Verbindung wie sie oben beschrieben ist und/oder einer Verbindung, in der x = 2 und y = 1 ist, und bei der bei mindestens einem R¹, R², R³ oder R^{3+y} mindestens ein m^{(1, ...,t)} nicht 0 ist, zur Trennung von Emulsionen.
Dabei ist die genannte Verwendung besonders bevorzugt, bei der die Emulsion Rohöl ist. Eine weitere bevorzugte Verwendung der genannten Verbindungen besteht in der Trennung von Emulsionen in der Papierverarbeitung.

Eine Zusammensetzung, die eine der oben genannten Verbindungen enthält bildet einen weiteren Gegenstand der vorliegenden Erfindung. Neben dieser Verbindung oder Mischung mehrerer dieser Verbindungen kann die erfindungsgemäße Zusammensetzung z.B. andere Demulgatoren enthalten, wie die, die als Stand der Technik genannt sind. Weitere Bestandteile können z. B. Lösungsmittel wie Xylol, Glycol, isoPropanol, Methanol,... sein.

Weiterhin bildet ein Kit of parts einen Gegenstand der vorliegenden Erfindung, bei dem eine Zusammensetzung wie oben beschrieben erhalten wird. Neben anderen Kits of parts sind daher solche umfasst, die zum einen die erfindungsgemäßen Verbindungen und zum anderen ein oder mehrere Lösungsmittel und/oder ein oder mehrere andere Demulgatoren enthalten.

Ein Verfahren zur Wasserabtrennung von Rohöl, bei dem eine der oben beschriebenen Verbindungen verwendet wird stellt einen weiteren Gegenstand der vorliegenden Erfindung dar. Dabei wird die erfindungsgemäße Verbindung vorzugsweise direkt am Bohrlochkopf in das Rohöl gegeben. Es kann aber auch in Separatoren in das Rohöl gegeben werden. Eine mehrfache Zudosierung der erfindungsgemäßen Verbindungen zum Rohöl ist bevorzugt. Ebenfalls bevorzugt ist ein Verfahren, bei dem die erfindungsgemäßen Verbindungen zusammen mit den genannten Lösungsmitteln in das Rohöl gegeben werden.

Das Öl, das die oben genannten erfindungsgemäßen Verbindungen enthält ist ebenfalls Gegenstand der vorliegenden Erfindung.

Die vorliegende Erfindung wird im Folgenden durch einige Beispiele näher erläutert:

### Beispiel 1:

### EDTA-tetra-Polyglykolester

Ein Gemisch aus 19,1 g (0,05 mol) EDTA-tetramethylester und 0,3 g Tetraisopropylorthotitanat wurde unter kräftigem Rühren und Überleiten von Stickstoff auf 50°C erwärmt.
Innerhalb von 30 Minuten ließ man unter gleichzeitiger Temperaturerhöhung auf 120 °C 327,8 g (0,2 mol) eines Methylpolyalkylenglykols (MePG) mit ca. 10 EO und ca. 30 PO (OH-Zahl: 34 mg KOH/g = 0,61 mmol/g) zutropfen.
Anschließend erhitzte man 6 Stunden auf 160°C und destillierte gleichzeitig das durch die Umesterung freigesetzte Methanol ab.
Laut GC-Analytik war nun der EDTA-Methylester vollständig umgesetzt.
Das resultierende gelbe Öl wies nach dem Abkühlen eine Ester-Zahl von 33 mg KOH/g auf.

### Beispiel 2:

### NTA-tri-Polyglykolester

Analog zu obigem Beispiel wurden 11,65 g (0,05 mol) NTA-trimethylester mit 245,9 g (0,15 mol) Me-PG mit 10 EO und 30 PO und 0,3 g Tetraiisopropylorthotitanat zum NTA-PGester umgesetzt.

Laut GC-Analytik war nach 7 Stunden bei 160°C der NTA-Methylester vollständig umgesetzt.
Es verblieb ein gelb-bräunliches Öl mit einer Ester-Zahl von 29 mg KOH/g.

### Beispiel 3:

Zu einer Rohölprobe wurden verschiedene Demulgatoren gegeben, und die Separationseigenschaften wurden untersucht. Bei Sepabase A 39 handelt es sich um zunächst mit EO ethoxyliertes und dann mit PO propoxyliertes Polyethylenimin. Bei Sepabase R19 handelt es sich um ein Harz aus Nonylphenolethoxylat, das mit Formaldehyd vernetzt ist und bei Dissolvan ebenfalls um ein Harz aus Nonylphenolethoxylat, das mit Formaldehyd vernetzt ist, allerdings in Lösungsmittel vorliegt. Bei EVD 60549 handelt es sich um eine erfindungsgemäße Verbindung auf EDTA-Basis, wie in Beispiel 1 beschrieben. Bei EVD 60550 handelt es sich um eine erfindungsgemäße Verbindung auf NTA-Basis, wie in Beispiel 2 beschrieben.

| | |
|---|---|
| Emulsion: | Emlichheim, Rohöl aus Sonde 83 |
| | (Rohölprobennahme vom 11.05.2005) |
| | |
| Viskosität: | 1540 mPa·s (Brookfield Sp. 3/60 UpM / bei 52°C) |
| | |
| Wassergehalt: | 54 % (Destillationsverfahren DIN ISO 3733) |
| | |
| Temperatur: | 52°C |
| | |
| Bemerkung: | Das Additiv (je 5% Wirksubstanz* in Xylol/Isopropanol 3:1) wurde |
| | nach Zugabe mit dem Überkopfmischer eingemischt. Zur |
| | Beurteilung wurden die Versuche gerüttelt. (Heidolph REAX top) |

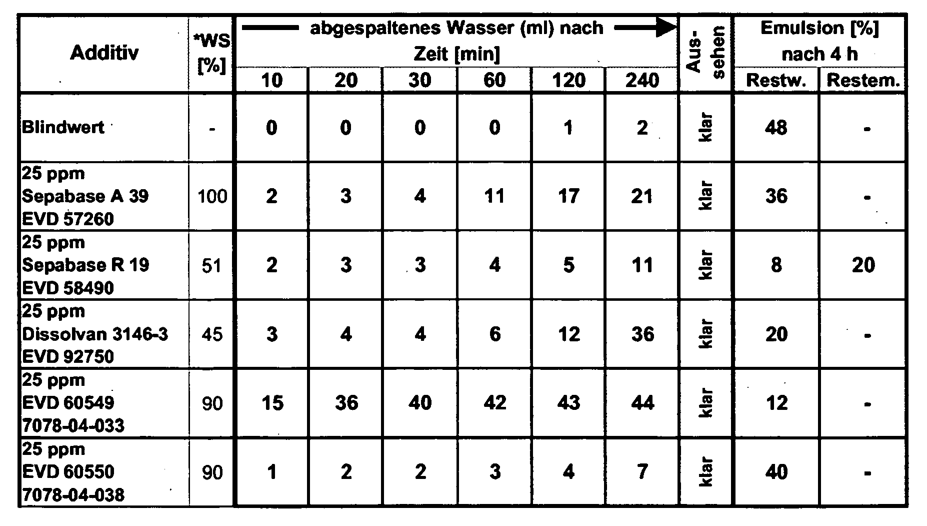

Es zeigt sich, dass beide erfindungsgemäßen Verbindungen in der Lage sind Wasser aus der Rohölemulsion abzuspalten. Im Falle des EVD 60549 zeigt sich auch, dass die erfindungsgemäße Verbindung nicht nur deutlich schneller zu einer Wasserabspaltung führt, sondern auch dass deutlich mehr Wasser abgespalten wird, als durch die bisher gebräuchlichen Demulgatoren.

### Beispiel 4:

Zu einer Rohölprobe wurden verschiedene Demulgatoren gegeben, und die Separationseigenschaften wurden untersucht. Bei Dissolvan handelt es sich um ein Harz aus Nonylphenolethoxylat, das mit Formaldehyd vernetzt ist, allerdings in Lösungsmittel vorliegt. Bei EVD 60549 handelt es sich um eine erfindungsgemäße Verbindung auf EDTA-Basis, wie in Beispiel 1 beschrieben.

| | |
|---|---|
| Emulsion: | Emlichheim, Mischung aus Sonde 83 + 301 / Kanister 2 |
| | (Rohölprobennahme vom 17.04.2005) |
| | |
| Viskosität: | 1212 mPa·s (Brookfield Sp. 3 / 60 UpM / bei 52°C) |
| | |
| Wassergehalt: | 49,5% (Destillationsverfahren DIN ISO 3733) |
| | |
| Temperatur: | 52°C |
| | |
| Bemerkung: | Das Additiv (je 5% WS* in Xylol/Isopropanol 3:1) wurde nach |
| | Zugabe mit dem Überkopfmischer eingemischt. Zur |
| | Beurteilung |

| Additiv | WS [%] | ― abgespaltenes Wasser (ml) nach → Zeit [min] | | | | | | Emulsion [%] nach 4 h | |
|---|---|---|---|---|---|---|---|---|---|
| | | 10 | 20 | 30 | 60 | 120 | 240 | Restw. | Restem. |
| Blindwert | - | 0 | 0 | 0 | 2 | 3 | 5 | 28 | 24 |
| 25 ppm | 100 | 2 | 5 | 8 | 16 | 25 | 31 | --- | 32 |
| Sepabase A 39 | | | | | | | | | |
| EVD 57260 | | | | | | | | | |
| 25 ppm | 45 | 3 | 4 | 4 | 6 | 19 | 38 | --- | 20 |
| Dissolvan 3146-3 | | | | | | | | | |
| EVD 92750 | | | | | | | | | |
| 25 ppm | 100 | 2 | 3 | 5 | 10 | 28 | 35 | --- | 32 |
| Tetronic 150 R1 | | | | | | | | | |
| EVD 92466 | | | | | | | | | |
| 25 ppm | 90 | 4 | 6 | 8 | 16 | 37 | 42 | --- | --- |
| EVD 60549 | | | | | | | | | |
| | | | | | | | | | |

| | | | | | | | | | |
|---|---|---|---|---|---|---|---|---|---|
| * WS = Wirksubstanz | | | | | | | | | |

Auch hier zeigt sich, dass die erfindungsgemäße Verbindung EVD 60549 sowohl die schnellste als auch die deutlichste Wasserabspaltung im Vergleich zu den bekannten Demulgatoren bewirkt.

### Beispiel 5:

Zu einer Rohölprobe wurden verschiedene Demulgatoren gegeben, und die Separationseigenschaften wurden untersucht. Bei Dissolvan handelt es sich um ein Harz aus Nonylphenolethoxylat, das mit Formaldehyd vernetzt ist, allerdings in Lösungsmittel vorliegt. Bei EVD 60549 handelt es sich um eine erfindungsgemäße Verbindung auf EDTA-Basis, wie in Beispiel 1 beschrieben.

| | |
|---|---|
| Emulsion: | Emlichheim, Öl aus Sonde 301 / Kanister 2 |
| | (Rohölprobennahme vom 06.04.2005) |
| | |
| Viskosität: | 440 mPa·s (Brookfield Sp. 3 / 60 UpM / bei 52°C) |
| | |
| Wassergehalt: | 30 % (Destillationsverfahren DIN ISO 3733) |
| | |
| Temperatur: | 52°C |
| | |
| Bemerkung: | Das Additiv (je 5% WS* in Xylol/Isopropanol 3:1) wurde nach |
| | Zugabe mit dem Überkopfmischer eingemischt. Zur |
| | Beurteilung |

| Additiv | WS [%] | ― abgespaltenes Wasser (ml) nach → Zeit [min] | | | | | | Emulsion [%] nach 4 h | |
|---|---|---|---|---|---|---|---|---|---|
| | | 10 | 20 | 30 | 60 | 120 | 240 | Restw. | Restem. |
| Blindwert | - | 0 | 0 | 0 | 0 | 0 | 1 | | |
| 25 ppm | 100 | 0 | 0 | 1 | 1 | 2 | 3 | | |
| Sepabase A 39 | | | | | | | | | |
| EVD 57260 | | | | | | | | | |
| 25 ppm | 51 | 0 | 0 | 1 | 2 | 2 | 4 | | |
| Sepabase R 19 | | | | | | | | | |
| EVD 58490 | | | | | | | | | |
| 25 ppm | 45 | 1 | 2 | 3 | 5 | 10 | 14 | | |
| Dissolvan 3146-3 | | | | | | | | | |
| EVD 92750 | | | | | | | | | |
| 25 ppm | 90 | 1 | 3 | 5 | 9 | 12 | 14 | | |
| EVD 60549 | | | | | | | | | |
| 25 ppm | 90 | 0 | 1 | 1 | 2 | 4 | 5 | | |
| EVD 60550 | | | | | | | | | |
| 25 ppm | 100 | 0 | 0 | 1 | 2 | 5 | 9 | | |
| Tetronic 150 R1 | | | | | | | | | |
| EVD 92466 | | | | | | | | | |

Auch hier zeigt sich, dass die erfindungsgemäße Verbindung EVD 60549 sowohl die schnellste als auch die deutlichste Wasserabspaltung im Vergleich zu den bekannten Demulgatoren bewirkt.

## Patentansprüche

1. Verbindung der Formel 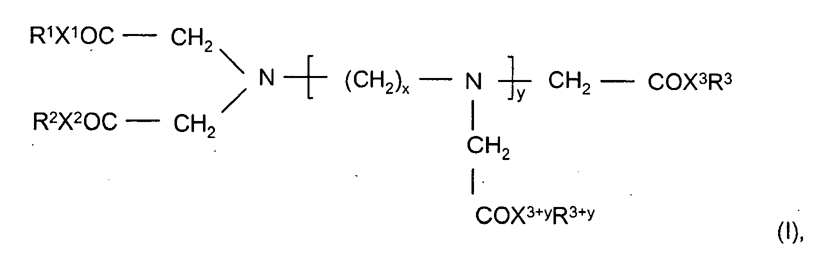 in der
x eine Zahl von 2 bis 10 ist,
y eine Zahl von 0 bis 10 ist,
R¹ R², R³, ..., R^{3+y} unabhängig voneinander
-[(EO)ₖ^{(1, ...,t)} -(PO)ₘ(^{1, ...,t)} -(BuO)ₙ^{(1, ...,t)}]ₜ -R^{z} ist,
k^{(1, ...,t)} in jedem der t Abschnitte unabhängig voneinander eine Zahl von 0 bis 200 ist,
m^{(1, ...,t)} in jedem der t Abschnitte unabhängig voneinander eine Zahl von 0 bis 200 ist,
n^{(1, ...,t)} in jedem der t Abschnitte unabhängig voneinander eine Zahl von 0 bis 200 ist,
t eine Zahl von 1 bis 20 ist,
R^{z} H, Alkyl, Cycloalkyl, Heteroalkyl, Heterocycloalkyl, Aryl, Aralkyl oder Heteroaryl ist,
X¹, X², X³, ..., X^{3+y} unabhängig voneinander -O-, -NH- oder -NR^{z}- ist,
mit der Massgabe, dass,
wenn x = 2 und y = 1 ist,
bei mindestens einem R¹, R², R³ oder R^{3+y} mindestens ein k^{(1, ...,t)} der n^{(1, ...,t)} nicht 0 ist und in allen anderen Fällen mindestens ein k^{(1 ...,t)} oder m^{(1, ...,t)} oder n^{(1, ...,t)} nicht 0 ist.

2. Verbindung nach Anspruch 1, bei der unabhängig voneinander
x eine Zahl von 2 bis 6 ist,
y eine Zahl von 0 bis 5 ist,
k^{(1, ...,t)} in jedem der t Abschnitte unabhängig voneinander eine Zahl von 0 bis 100 ist,
m^{(1, ...,t)} in jedem der t Abschnitte unabhängig voneinander eine Zahl von 0 bis 100 ist,
n^{(1, ...,t)} in jedem der t Abschnitte unabhängig voneinander eine Zahl von 0 bis 100 ist,
t eine Zahl von 1 bis 10 ist,
R^{z} H oder Alkyl, Cycloalkyl, Heteroalkyl, Heterocycloalkyl, Aryl, Aralkyl oder Heteroaryl mit 1 bis 20 C-Atomen ist,
jedes X¹, X², X³, ..., X^{3+y} -O-, -NH- oder -NR^{z}- ist.

3. Verbindung nach Anspruch 1 oder 2, bei der unabhängig voneinander
x 2 ist,
y 0, 1 oder 2 ist,
k^{(1, ...,t)} in jedem der t Abschnitte unabhängig voneinander eine Zahl von 0 bis 50 ist,
m^{(1, ...,t)} in jedem der t Abschnitte unabhängig voneinander eine Zahl von 0 bis 50 ist,
n^{(1, ...,t)} in jedem der t Abschnitte unabhängig voneinander eine Zahl von 0 bis 50 ist,
t eine Zahl von 1 bis 5 ist,
R^{z} H oder Alkyl, Cycloalkyl, Heteroalkyl, Heterocycloalkyl, Aryl, Aralkyl oder Heteroaryl mit 1 bis 10 C-Atomen ist,
X¹ X², X³, ..., X^{3+y} -O- ist.

4. Verbindung nach einem der Ansprüche 1 bis 3, bei der unabhängig voneinander
y = 1 ist,
k^{(1, ...,t)} in jedem der t Abschnitte unabhängig voneinander eine Zahl von 0 bis 30 ist,
m^{(1, ...,t)} in jedem der t Abschnitte unabhängig voneinander eine Zahl von 0 bis 30 ist,
n^{(1, ...,t)} in jedem der t Abschnitte unabhängig voneinander eine Zahl von 0 bis 30 ist,
t = 1, 2 oder 3 ist,
R^{z} H oder Alkyl mit 1 bis 5 C-Atomen ist.

5. Verbindung nach einem der Ansprüche 1 bis 4, bei der
a) t = 1 ist und
(i) k¹ = 0 ist oder
(ii) m¹ = 0 ist oder
(iii) n¹ = 0 ist; oder
b) t = 2 ist und
(i) k¹ = 0 ist, m¹ und k² nicht 0 ist oder
(ii) k¹ und m¹ = 0 sind, n¹ nicht 0 ist und k² nicht 0 ist oder k¹ und m¹ = 0 sind, n¹ nicht 0 ist und m² nicht 0 ist.

6. Verbindung nach einem der Ansprüche 1 bis 5, bei der jedes k(^{1, ...,t)} oder jedes m^{(1, ...,t)} oder jedes n^{(1, ...,t)} = 0 ist.

7. Verfahren zur Herstellung einer Verbindung gemäß einem der Ansprüche 1 bis 6, bei dem eine Verbindung der Formel 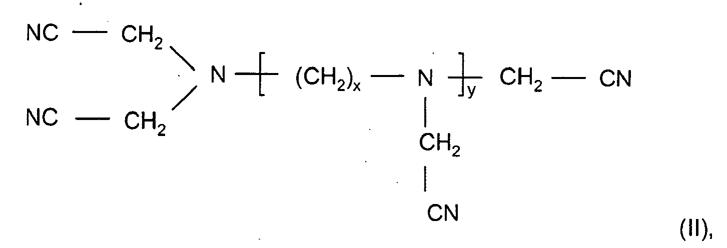 wobei x und y dieselbe Bedeutung haben wie in einem der Ansprüche 1 bis 4, in einem ersten Schritt mit R¹-X¹H, R²-X²H, R³-X³H, ..., R^{3+y}-X^{3+y}H und Mineralsäure und gleichzeitig oder
in einem zweiten Schritt mit Wasser oder einer wässrigen Base umgesetzt wird.

8. Verfahren zur Herstellung einer Verbindung gemäß einem der Ansprüche 1 bis 6, bei dem ein niederer Carbonsäureester oder eine Carbonsäure der Formel 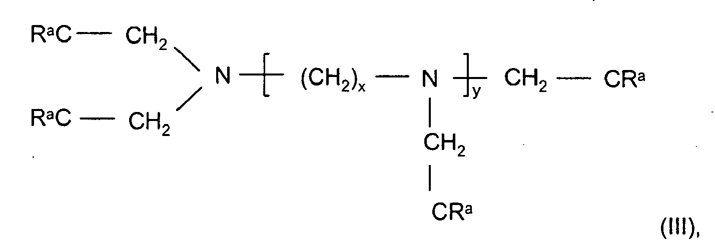 wobei x und y dieselbe Bedeutung haben wie in einem der Ansprüche 1 bis 4 und mit R^{a} = C₁-C₆-Alkyl, H
säure- oder basekatalysiert mit Alkylpolyglycol umgesetzt wird.

9. Verfahren nach Anspruch 8, bei dem der entstehende Alkohol R^{a}-OH mit R^{a} = C₁-C₆-Alkyl durch Destillation entfernt wird.

10. Verwendung einer Verbindung gemäß einem der Ansprüche 1 bis 6 und/oder einer Verbindung, in der x = 2 und y = 1 ist, und bei der bei mindestens einem R¹ R², R³ oder R^{3+y} mindestens ein m^{(1, ...,t)} nicht 0 ist, zur Trennung von Emulsionen.

11. Verwendung nach Anspruch 10, bei der die Emulsion Rohöl ist.

12. Zusammensetzung, die eine Verbindung gemäß einem der Ansprüche 1 bis 6 enthält.

13. Kit of parts, bei dem eine Zusammensetzung gemäß Anspruch 12 erhalten wird.

14. Verfahren zur Wasserabtrennung von Rohöl, bei dem eine Verbindung gemäß einem der Ansprüche 1 bis 6 verwendet wird.

15. Öl, das Verbindungen gemäß einem der Ansprüche 1 bis 6 enthält.

## Claims

1. A compound of the formula 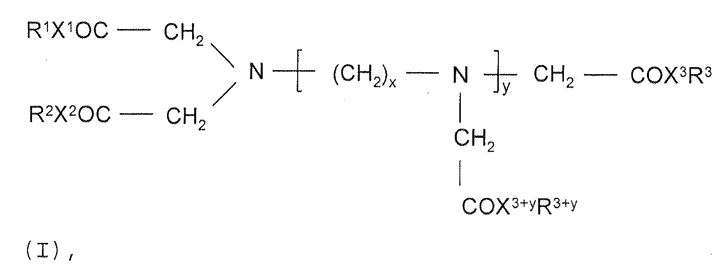 where
x is from 2 to 10,
y is from 0 to 10,
R¹, R², R³, ..., R^{3+y} are each, independently of one another,
-[(EO)ₖ^{(1, ...,t)}- (PO)ₘ^{(1, ...,t)} - (BuO)ₙ^{(1, ...,t)}]ₜ-R^{z},
the indices k^{(1, ...,t)} in the t sections are each, independently of one another, from 0 to 200,
the indices m^{(1, ...,t)} in the t sections are each, independently of one another, from 0 to 200,
the indices n^{(1, ...,t)} in the t sections are each, independently of one another, from 0 to 200,
t is from 1 to 20,
R^{z} is H, alkyl, cycloalkyl, heteroalkyl, heterocycloalkyl, aryl, aralkyl or heteroaryl,
X¹, X², X³, ..., X^{3+y} are each, independently of one another, -O-, -NH- or -NR^{z}-,
with the proviso that
when x = 2 and y = 1,
in at least one R¹, R², R³ or R^{3+y}, at least one k^{(1, ...,t)} or n^{(1, ...,t)} is not 0, und in all other cases, at least one k^{(1, ...,t)} or m^{(1, ...,t)} or n^{(1, ...,t)} is not 0.

2. The compound according to claim 1, wherein, independently of one another,
x is from 2 to 6,
y is from 0 to 5,
the indices k^{(1, ...,t)} in the t sections are each, independently of one another, from 0 to 100,
the indices m ^{(1, ...,t)} in the t sections are each, independently of one another, from 0 to 100,
the indices n^{(1, ...,t)} in the t sections are each, independently of one another, from 0 to 100,
t is from 1 to 10,
R^{z} is H or alkyl, cycloalkyl, heteroalkyl, heterocycloalkyl, aryl, aralkyl or heteroaryl having from 1 to 20 carbon atoms,
each X¹, X², X³, ..., X^{3+y} is -O-, -NH- or -NR^{z}- .

3. The compound according to claim 1 or 2, wherein, independently of one another,
x is 2,
y is 0, 1 or 2,
the indices k^{(1, ...,t)} in the t sections are each, independently of one another, from 0 to 50,
the indices m^{(1, ...,t)} in the t sections are each, independently of one another, from 0 to 50,
the indices n^{(1, ...,t)} in the t sections are each, independently of one another, from 0 to 50,
t is from 1 to 5,
R^{z} is H or alkyl, cycloalkyl, heteroalkyl, heterocycloalkyl, aryl, aralkyl or heteroaryl having from1 to 10 carbon atoms,
X¹, X² X³, ..., X^{3+y} is -O-.

4. The compound according to any of claims 1 to 3, wherein, independently of one another,
y = 1,
the indices k^{(1, ...,t)} in the t sections are each, independently of one another, from 0 to 30,
the indices m^{(1, ..., t)} in the t sections are each, independently of one another, from 0 to 30,
the indices n^{(1, ...,t)} in the t sections are each, independently of one another, from 0 to 30,
t = 1, 2 or 3,
R^{z} is H or alkyl having from 1 to 5 carbon atoms.

5. The compound according to any of claims 1 to 4, wherein
a) t = 1 and
(i) k¹= 0 or
(ii) m¹ = 0 or
(iii) n¹ = 0; or
b) t = 2 and
(i) k¹ = 0, m¹ and k² are not 0 or
(ii) k¹ and m¹ = 0, n¹ is not 0 and k² is not 0
or
k¹ and m¹ = 0, n¹ is not 0 and m² is not 0.

6. The compound according to any of claims 1 to 5, wherein
each k^{(1, ...,t)} or each m^{(1, ...,t)} or each n^{(1, ...,t)} = 0.

7. A process for preparing a compound according to any of claims 1 to 6, which comprises reacting a compound of the formula 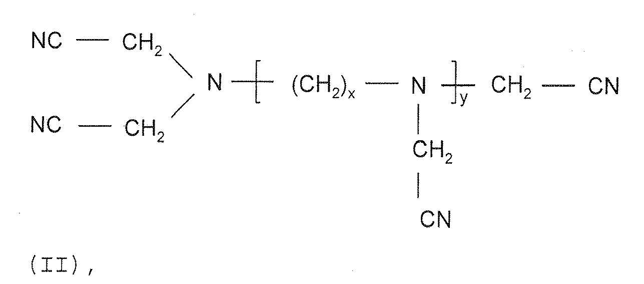 where x and y are as defined in any of claims 1 to 4,
in a first step with R¹-X¹H, R²-X²H, R³-X³H, ..., R^{3+y}-X^{3+y}H and mineral acid and simultaneously or
in a second step with water or an aqueous base.

8. A process for preparing a compound according to any of claims 1 to 6, which comprises reacting a lower carboxylic ester or a carboxylic acid of the formula 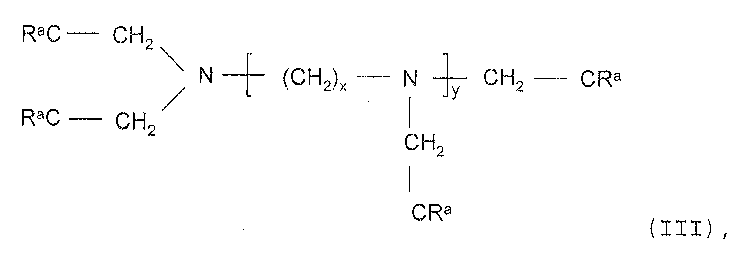 where x and y are as defined in any of claims 1 to 4 and R^{a} = C₁-C₆-alkyl, H,
with alkyl polyglycol in the presence of an acid or base as catalyst.

9. The process according to claim 8, wherein the alcohol R^{a}-OH formed, where R^{a} = C₁-C₆-alkyl, is removed by distillation.

10. The use of a compound according to any of claims 1 to 6 and/or a compound in which x = 2 and y = 1 and in which at least one m^{(1, ...,t)} in at least one R¹, R², R³ or R^{3+y} is not 0 for separating emulsions.

11. The use according to claim 10, wherein the emulsion is crude oil.

12. A composition comprising a compound according to any of claims 1 to 6.

13. A kit of parts comprising a composition according to claim 12.

14. A method of separating off water from crude oil, wherein a compound according to any of claims 1 to 6 is used.

15. An oil comprising compounds according to any of claims 1 to 6.

## Revendications

1. Composé de formule 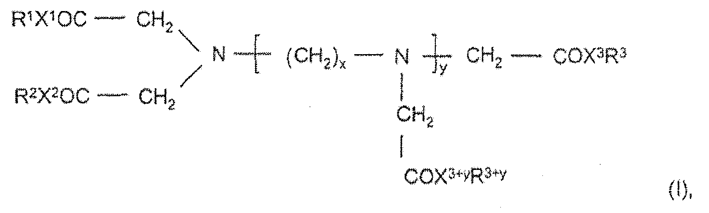 dans laquelle
x vaut un nombre entier de 2 à 10,
y vaut un nombre entier de 0 à 10,
R¹, R², R³, ..., R^{3+y} représentent, indépendamment l'un de l'autre,
-[(EO)ₖ^{(1, ...,t)}-(PO)ₘ^{(1, ...,t)} - (BuO)ₙ^{(1, ...,t)}]ₜ-R^{z}, k^{(1, ...,t)} dans chacune des t fractions vaut, indépendamment l'un de l'autre, un nombre de 0 à 200,
m^{(1, ...,t)} dans chacune des t fractions vaut, indépendamment l'un de l'autre, un nombre de 0 à 200,
n^{(1, ...,t)} dans chacune des t fractions vaut, indépendamment l'un de l'autre, un nombre de 0 à 200,
t vaut un nombre entier de 1 à 20,
R^{z} représente H, alkyle, cycloalkyle, hétéroalkyle, hétérocycloalkyle, aryle, aralkyle ou hétéroaryle,
X¹, X², X³, ..., X^{3+y} représentent, indépendamment l'un de l'autre, -O-, -NH- ou -NR^{z}-,
à condition que,
lorsque x = 2 et y = 1,
dans au moins un R¹, R², R³ ou R^{3+y}, au moins un k^{(1, ...,t)} ou n^{(1, ...,t)} ne vaille pas 0 et dans tous les autres cas, au moins un k^{(1, ..., t)} ou m^{(1, ...,t)} ou n^{(1, ...,t)} ne vaille pas 0.

2. Composé selon la revendication 1, où, indépendamment l'un de l'autre
x vaut un nombre de 2 à 6,
y vaut un nombre de 0 à 5,
k^{(1 ...,t)} dans chacune des t fractions vaut, indépendamment l'un de l'autre, un nombre de 0 à 100,
m^{(1, ...,t)} dans chacune des t fractions vaut, indépendamment l'un de l'autre, un nombre de 0 à 100,
n^{(1, ...,t)} dans chacune des t fractions vaut, indépendamment l'un de l'autre, un nombre de 0 à 100,
t vaut un nombre de 1 à 10,
R^{z} représente H ou alkyle, cycloalkyle, hétéroalkyle, hétérocycloalkyle, aryle, aralkyle ou hétéroaryle comprenant 1 à 20 atomes de carbone,
chaque X¹, X², X³, ...,X^{3+y} représente -O-, -NH- ou -NR^{z}-.

3. Composé selon la revendication 1 ou 2, où, indépendamment l'un de l'autre
x vaut 2,
y vaut 0, 1 ou 2,
k^{(1, ...,t)} dans chacune des t fractions vaut, indépendamment l'un de l'autre, un nombre de 0 à 50,
m^{(1, ...,t)} dans chacune des t fractions vaut, indépendamment l'un de l'autre, un nombre de 0 à 50,
n^{(1, ...,t)} dans chacune des t fractions vaut, indépendamment l'un de l'autre, un nombre de 0 à 50,
t vaut un nombre de 1 à 5,
R^{z} représente H ou alkyle, cycloalkyle, hétéroalkyle, hétérocycloalkyle, aryle, aralkyle ou hétéroaryle comprenant 1 à 10 atomes de carbone,
X¹, X², X³, ..., X^{3+y} représente -O-.

4. Composé selon l'une quelconque des revendications 1 à 3, où, indépendamment l'un de l'autre
y = 1,
k ^{(1, ...,t)} dans chacune des t fractions vaut, indépendamment l'un de l'autre, un nombre de 0 à 30,
m^{(1, ...,t)} dans chacune des t fractions vaut, indépendamment l'un de l'autre, un nombre de 0 à 30,
n^{(1, ...,t)} dans chacune des t fractions vaut, indépendamment l'un de l'autre, un nombre de 0 à 30,
t = 1, 2 ou 3,
R^{z} représente H ou alkyle comprenant 1 à 5 atomes de carbone.

5. Composé selon l'une quelconque des revendications 1 à 4, où
a) t = 1 et
(i) k¹ = 0 ou
(ii) m¹ = 0 ou
(iii) n¹ = 0 ; ou
b) t = 2 et
(i) k¹ = 0, m¹ et k² ne valent pas 0 ou
(ii) k¹ et m¹ = 0, n¹ ne vaut pas 0 et k² ne vaut pas 0 ou
k¹ et m¹ = 0, n¹ ne vaut pas 0 et m² ne vaut pas 0.

6. Composé selon l'une quelconque des revendications 1 à 5, où
chaque k^{(1, ...,t)} ou chaque m ^{(1, ...,t)} ou chaque n^{(1, ...,t)} = 0.

7. Procédé pour la préparation d'un composé selon l'une quelconque des revendications 1 à 6, dans lequel un composé de formule 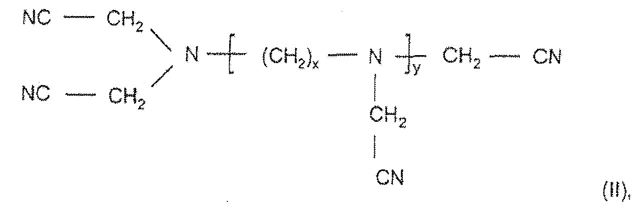 où x et y ont la même signification que dans l'une quelconque des revendications 1 à 4,
- dans une première étape, est transformé avec R¹-X¹H, R²-X²H, R³-X³H, ..., R^{3+y}-X^{3+y}H et de l'acide minéral et simultanément ou
- dans une deuxième étape avec de l'eau ou une base aqueuse.

8. Procédé pour la préparation d'un composé selon l'une quelconque des revendications 1 à 6, dans lequel un ester d'un acide carboxylique inférieur ou un acide carboxylique de formule 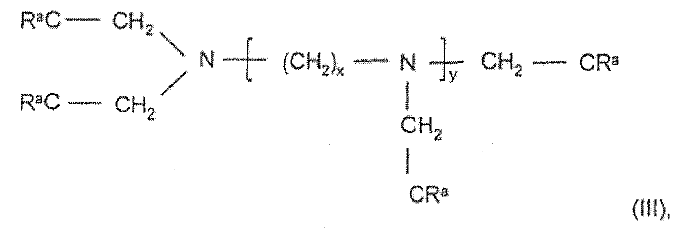 où x et y ont la même signification que dans l'une quelconque des revendications 1 à 4 et avec R^{a} = C₁-C₆-akyle, H
est transformé avec un alkylpolyglycol avec une catalyse acide ou basique.

9. Procédé selon la revendication 8, dans lequel l'alcool formé R^{a}-OH avec R^{a} = alkyle en C₁-C₆ est éliminé par distillation.

10. Utilisation d'un composé selon l'une quelconque des revendications 1 à 6 et/ou d'un composé dans lequel x = 2 et y = 1, et dans lequel, pour au moins un R¹, R², R³ ou R^{3+y}, au moins un m ^{(1, ...,t)} ne vaut pas 0, pour la séparation d'émulsions.

11. Utilisation selon la revendication 10, dans laquelle l'émulsion est le pétrole brut.

12. Composition, qui contient un composé selon l'une quelconque des revendications 1 à 6.

13. Kit avec lequel est obtenue une composition selon la revendication 12.

14. Procédé pour la séparation d'eau de pétrole brut, dans lequel est utilisé un composé selon l'une quelconque des revendications 1 à 6.

15. Huile, qui contient des composés selon l'une quelconque des revendications 1 à 6.
